# EUROPEAN PATENT APPLICATION

(11) **EP 4 767 826 A1**
(43) Date of publication of application: **01.07.2026**
(21) Application number: 24223675.0
(22) Date of filing: 30.12.2024
(51) Int. Cl.: A23B 11/10, A23B 11/82, A23C 7/04, A23C 21/02, A23C 9/142, A23B 11/80

(54) **METHOD FOR PRODUCING A DAIRY PRODUCT AND A SYSTEM CONFIGURED TO PRODUCE A DAIRY PRODUCT**

(71) Applicant: Tetra Laval Holdings & Finance S.A., 1009 Pully (CH)
(72) Inventor: Cronström, Carin, 22186 Lund (SE); Leonhard Jensen, Claus, 8600 Silkesborg (DK); Edén, Jonas, 22186 Lund (SE); Seyhun, Ahemt Hadi, 22186 Lund (SE); He, Helen, Kunshan, 215301 (CN)
(74) Representative: Tetra Pak Patent Attorneys

(57) **Abstract**

A method (200) for producing a diary product (P1). The method (200) comprising: feeding (S202) a dairy material (DM) to a first filtration stage (101); filtering (S204) the dairy material (DM), in the first filtration stage (101), into a first permeate stream (P1) and a first retentate stream (R1); feeding (S206) the first retentate stream (R1) to a second filtration stage (102); filtering (S208) the first retentate stream (R1) into a second permeate stream (P2) and a second retentate stream (R2); recirculating (S210) the second permeate stream (P2) by feeding it to the first filtration stage (101); and collecting (S212) the first permeate stream (P1) as the dairy product. The disclosure further relates to a system (100) configured to produce a dairy product.

## Description

### Technical Field

The invention relates to a method for producing a diary product. The invention further relates to a system configured to produce a dairy product.

### Background

In the dairy industry, it is common practice to filtrate dairy material to reduce microorganisms in the dairy material when producing a dairy product. By way of examples, microfiltration is used which is a process based on particle separation. The pore-size of the membrane is chosen so that the dairy components can pass through, but the microorganisms are retained. Thus, microfiltration is a type of physical filtration process where a contaminated fluid, i.e. the dairy material, is passed through a special pore-sized membrane filter to separate microorganisms and suspended particles from process liquid. In the dairy industry, the microfiltration membranes aid in the removal of bacteria and the associated spored from the dairy material by rejecting the harmful species from passing through.

Even though the microfiltration technology has been used in the food processing industry for decades, there is room for improvement for obtaining a desired dairy product in an efficient and optimized way. A further challenge is to optimize the microbiological load performance.

For these reasons, there is a demand for a method for producing a dairy product that fulfills the legal requirements related to food processing industry at the same time as the method is provided in an efficient and optimized way. There is also a demand for optimizing the microbiological load performance.

### Summary

It is an object of the invention to at least partly overcome one or more of the above-identified limitations of the prior art. In particular, it is an object to provide for an optimized method for producing dairy products. Another object is to provide a method and system which optimize the microbiological load performance.

One or more of these objectives, as well as further objectives that may appear from the description below, are at least partly achieved by methods according to the following aspects.

A first aspect relates to a method for producing a diary product, the method comprising:
feeding a dairy material to a first filtration stage;
filtering the dairy material, in the first filtration stage, into a first permeate stream and a first retentate stream;
feeding the first retentate stream to a second filtration stage;
filtering the first retentate stream into a second permeate stream and a second retentate stream;
recirculating the second permeate stream by feeding it to the first filtration stage; and
collecting the first permeate stream as the dairy product.

The first filtration stage and the second filtration stage may form a filtration unit. The method of the first aspect may be advantageous as it allows for optimizing the microbiological performance of the complete filtration unit. This is achieved by recirculating the second permeate stream by feeding it to the first filtration stage and by collecting only the first permeate stream, i.e. a permeate stream from the first filtration stage, as the dairy product. In the first permeate stream, the initial microbiological load is lowest compared to the other streams. By collecting only the first permeate stream as the dairy product provides for that the total performance of the filtration unit is higher compared to if both the first and second permeate stream would be collected as the dairy product. As the retentate contains higher levels of spores, the permeate from the second filtration stage has a higher concentration of spores compared to the permeate stream from the first filtration stage. Although the quantity of permeate from the second filtration stage is relatively small compared to the total permeate volume, it will reduce total performance of the filtration unit. Thus, the production of the diary product, the collection of the dairy product as well as the dairy product itself is optimized.

By recirculating the second permeate stream to the first filtration stage, the second permeate stream will be filtered into the first permeate stream and the first retentate stream, wherein the first permeate stream will be collected as the dairy product. This also provides for minimizing product losses from the dairy material.

Thus, the second filtration stage may be advantageous as it allows for concentrating the retentate even further compared to conventional solutions. The second filtration stage may be further advantageous as it allows for recirculating the permeate.

The method may be further advantageous as it allows for an improved microbiological performance also at a high concentration factor of the filtration unit.

The method may be yet further advantageous as it allows for reducing microbiological load in the dairy product. The microbiological load is reduced in an easy and efficient way.

In some embodiments, the dairy material is filtered in the first filtration stage at a concentration factor of 15-25 times.

This is advantageous as it allows for filtrating the dairy material into the first permeate stream and the first retentate stream in a way such that the first permeate stream contains an allowable amount of spores in relation to legal requirements within the food processing industry. Thus, the higher the concentration factor is, the more spores are comprised in the first retentate stream, i.e. the higher is the concentration of spores in the first retentate stream. The higher concentration factor, the higher performance of the filtration stage. The higher concentration factor, the lower is the concentration of spores in the first permeate stream.

In some embodiments, the first retentate stream is filtered in the second filtration stage at a concentration factor of 5-15 times.

In some embodiments, the second permeate stream is recirculated to the first filtration stage with an infeed flow rate which is 5-15 times higher than an outfeed flow rate of the second retentate stream.

This is advantageous as it allows for that a smaller amount of stream being discharged from the filtration unit compared to the amount of stream which is recirculated in the filtration unit. Thus, the production losses, or waste production, may be lower compared to conventional solutions.

In some embodiments, the first retentate stream has 15-25 times higher microbiological load per liter than the dairy material.

This may be advantageous as it allows for a higher concentration of spores in the first retentate stream compared to the first permeate stream.

In some embodiments, the second permeate stream has 10-20 times higher microbiological load per liter than the first permeate stream.

In some embodiments, the first filtration stage has a performance of 3.5-5.5 log reductions of microbiological load.

This may be advantageous as it allows for that almost all of the microorganisms of the dairy material are removed in the first filtration stage. Thus, almost all of the microorganisms of the dairy material are collected in the first retentate stream such that a very small amount of microorganisms is comprised in the first permeate stream.

In some embodiments, the second filtration stage has a performance of 3.5-5.5 log reductions of microbiological load.

In some embodiments, the first filtration stage comprises one or more ceramic membranes.

This may be advantageous as ceramic membrane have a very high thermal stability and pressure tolerance, with working conditions mostly limited by the sealing materials and vessel/module structures.

In some embodiments, the second filtration stage comprises one or more ceramic membranes.

In some embodiments, the first filtration stage comprises a microfilter having a pore size ranging from 0.1 to 10 micrometers.

This may be advantageous as it allows using microfilter having a greater pore size compared to conventional solutions at the same time as a desired filtering result is achieved. Thus, a more cost-efficient solution may be provided.

In some embodiments, the second filtration stage comprises a microfilter having a pore size ranging from 0.1 to 10 micrometers.

In some embodiments, the first and second filtration stages are the only filtration stages that are used by the method.

This may be advantageous as it allows for an optimized filtration unit. This may be further advantageous as it allows for a more cost-efficient filtration unit. This is achieved due to that only two filtration stages need to be used by the method in order to achieve a desired filtration result.

In some embodiments, the dairy material is skim milk, sweet whey or acid whey.

A second aspect relates to a system configured to produce a diary product, the system comprising:
a first filtration stage arranged to filter the dairy material into a first permeate stream and a first retentate stream;
a second filtration stage arranged to filter the first retentate stream into a second permeate stream and a second retentate stream;
a pasteurizer arranged to pasteurize the first permeate stream to form the dairy product; and
a filling machine arranged to fill packages with the pasteurized dairy product.

Features, advantages and embodiments described for a certain aspect apply, i.e. may be implemented, for the other aspects described herein. Further objectives, features, aspects and advantages of the invention will appear from the following detailed description as well as from the drawings.

### Drawings

Fig. 1 illustrates a system configured to produce a dairy product.
Fig. 2 is a flowchart illustrating steps of a method for producing a dairy product.

### Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

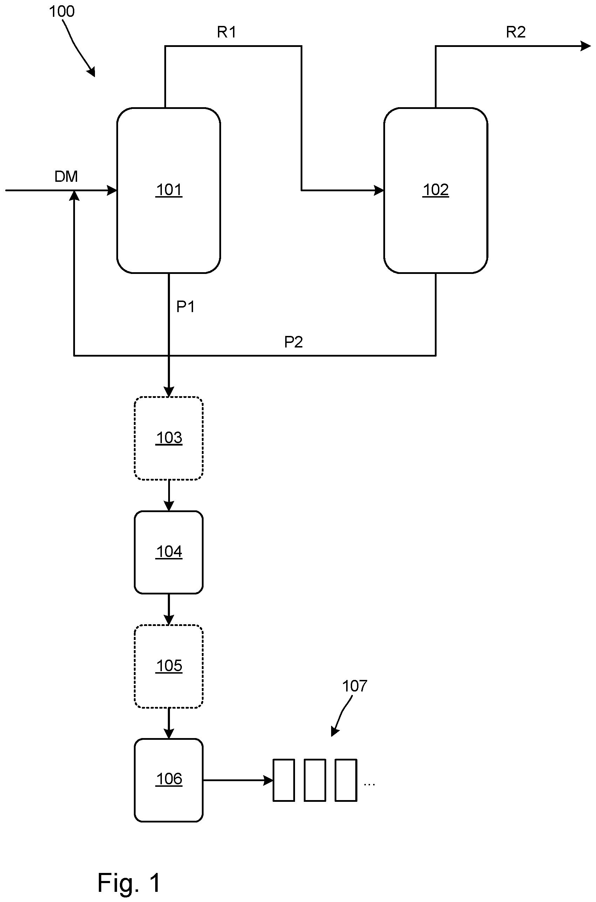

Fig. 1 illustrates a system 100 configured to produce a dairy product P1 by way of example. The system 100 comprising a first filtration stage 101 arranged to filter dairy material DM into a first permeate stream P1 and a first retentate stream R1. The system 100 also comprises a second filtration stage 102 arranged to filter the first retentate stream R1 into a second permeate stream P2 and a second retentate stream R2. The first and second filtration stages 101, 102 may together form a filtration unit. The first filtration stage 101 and the second filtration stage 102 are positioned in series.

As used herein, a "filtration stage" is a distinct step in a separation process that begins with a defined input, such as a feed stream (i.e. the dairy material DM) or retentate from a prior stage (i.e. the second retentate stream R2), and produces two clearly distinct output streams: a permeate stream (i.e. the first or second permeate stream P1, P2), which contains the portion of the material that passes through the filtration medium, and a retentate stream (i.e. the first or second retentate stream R1, R2), which contains the portion of the material retained by the filtration medium. Each filtration stage is characterized by its independent processing of the input to generate these separate outputs using a specific filtration device or membrane. Thus, the retentate stream contains high levels of spores, while the permeate stream contains a much lower level of spores.

The dairy material may be skim milk, i.e. milk from which all, or almost all, milkfat is removed, sweet whey or acid whey (also known as sour whey). Sweet whey is a byproduct resulting from the manufacture of rennet types of hard cheese. Acid whey is a byproduct brought out during the making of acid types of dairy products, such as strained yoghurt. Thus, although not illustrated, the dairy material DM has typically been pre-processed before entering the first filtration stage 101 as the dairy material DM.

The dairy material DM typically comprises dairy material components such as casein, whey proteins, minerals, Lactose, carbohydrates, acid, water, and proteins among other things. The dairy material DM also comprises a high level of microorganisms such as spores and bacteria. Almost all of the microorganisms have to be removed from the dairy material DM such that the dairy product contains a valid amount of microorganisms, i.e. the amount has to fulfill standards and requirements well-known in the food processing industry.

The filtration unit 101, 102 is used for removing microorganisms from the dairy material DM such that the microbiological load of the dairy product DP is reduced. Microbiological load of the diary material DM can be reduced by using the first and second filtration stages 101, 102 with a defined pore size, i.e. 0.1-10 micrometers, of the present disclosure. Preferably, the pore size of the first filtration stage is 1.4 micrometers. Preferably, the pore size of the second filtration stage is 1.4 micrometers. As used herein, the "microbiological load" refers to a number of microorganisms contaminating the stream of product, i.e. the number of microorganisms per liter in one of the streams DM, P1, P2, R1, R2. The first retentate stream R1 may have 5-15 times higher microbiological load per liter than the dairy material DM. The second permeate stream P2 may have 10-20 times higher microbiological load per liter than the first permeate stream P2. Only the first permeate stream P1, i.e. the permeate stream from the first filtration stage 101, is collected as the dairy product. The first permeate stream P1 is the stream which has the lowest microbiological load of the different streams. As the first retentate stream R1 contains a high level of spores, the second permeate stream P2 has a higher concentration of spores compared to the first permeate stream P1. Although the quantity of permeate from the second filtration stage 102 is relatively small compared to the total permeate volume, it will reduce total performance of the filtration unit 101, 102.

The first filtration stage 101 may comprise one or more ceramic membranes. The number of membranes may be dependent on e.g. capacity of the filtration stage and material of the membranes. The membrane may be a double layer membrane. The second filtration stage 102 may comprise one or more ceramic membranes. The number of membranes may be dependent on e.g. capacity of the filtration stage and material of the membranes. The membrane may be a double layer membrane.

According to the present disclosure, the dairy material DM is fed to the first filtration stage 101 in which the dairy material DM is filtered into the first permeate stream P1 and the first retentate stream R1. The first permeate stream P1 is collected as the dairy product. The first retentate stream R1 is fed to the second filtration stage 102 in which the first retentate stream R1 is filtered into the second permeate stream P2 and the second retentate stream R2. The second permeate stream P2 is recirculated in the filtration unit by feeding it to the first filtration stage 101. In the first filtration stage 101, the second permeate stream P2 is filtered into the first permeate stream P1 and the first retentate stream R1. The first permeate stream P1 is collected as the dairy product. The first retentate stream R1 is fed to the second filtration stage 102 and so on. Thus, only the first permeate stream P1 is collected as the dairy product.

The dairy material DM may be fed to the first filtration stage 101 by a dairy material infeed flow rate. The first permeate stream P1 may be fed from the first filtration stage 101 by a first permeate outfeed flow rate. The first retentate stream R1 may be fed from the first filtration stage 101 by a first retentate outfeed flow rate. The first retentate stream R1 may be fed to the second filtration stage 102 by a first retentate infeed flow rate. The second permeate stream P2 may be fed from the second filtration stage 102 by a second permeate outfeed flow rate. The second retentate stream R2 may be fed from the second filtration stage 102 by a second retentate outfeed flow rate. As used herein, the respective infeed and outfeed flow rates are measured in liters/hours (L/h), e.g. liters of dairy material DM fed to the first filtration stage 101 per hour or liters of first stream retentate R1 fed from the first filtration stage 101 per hour. By way of example, the second permeate stream P2 is recirculated to the first filtration stage 101 with an infeed flow rate which is 5-15 times higher than an outfeed flow rate of the second retentate stream R2.

The dairy material DM may be filtered in the first filtration stage 101 at a concentration factor of 15-25 times. Thus, the concentration factor of the first filtration stage 101 is 15-25 times. The first retentate stream R1 may be filtered in the second filtration stage 102 at a concentration factor of 5-15 times. Thus, the concentration factor of the second filtration stage is 5-15 times. A total concentration factor of the first and second filtration stages 101, 102 is 75-375 times. As used herein, "concentration factor" refers to the volume reduction achieved by concentration, i.e. the ratio of initial volume of feed (i.e. the volume of the dairy material DM in the first filtration stage 101 or the volume of the first retentate stream R1 in the second filtration stage 102) to the final volume of retentate (i.e. the volume of the first retentate stream R1 in the first filtration stage 101 or the volume of the second retentate stream R2 in the second filtration stage 102). As used herein, "total concentration factor" refers to the concentration factor of the first filtration stage 101 times the concentration factor of the second filtration stage 102.

The first filtration stage 101 may have a performance of 3.5-5.5 log reductions of microbiological load. The second filtration stage 102 may have a performance of 3.5-5.5 log reductions of microbiological load. As used herein, "log reduction" refers to a percentage of microorganisms physically removed or inactivated by the disclosed method. 1 log reduction = 90%, 2 log reduction = 99%, 3 log reduction = 99,9%, 4 log reduction = 99,99%. Preferably, the performance of the first filtration stage 101 and the second filtration stage 102 are the same but the microbiological load of the first retentate stream R1 fed to the second filtration stage 102 is higher compared to the microbiological load of the dairy material DM fed to the first filtration stage 101.

By way of examples, the dairy material DM is fed to the first filtration stage 101 with a dairy material infeed flow rate of 20 000 L/h and with a microbiological load of 500 spores/ml. In the first filtration stage 101, the dairy material DM is filtered into the first permeate stream P1 and the first retentate stream R1. The first permeate stream P1 has a first permeate outfeed flow rate from the first filtration stage 101 of 19 900 L/h and a microbiological load of 0.02 spores/ml. The first retentate stream R1 has a first retentate outfeed flow rate from the first filtration stage 101 of 999 L/h and a microbiological load of 10 010 spores/ml. The first filtration stage 101 has a performance of 4.5 log reductions of microbiological load. The first filtration stage 101 has a concentration factor of 20 times. The first retentate stream R1 is fed to the second filtration stage 102 with a retentate infeed flow rate of 999 L/h and a microbiological load of 10 010 spores/ml. In the second filtration stage 102, the first retentate stream R1 is filtered into the second permeate stream P2 and the second retentate stream R2. The second permeate stream P2 has a second permeate outfeed flow rate from the second filtration stage 102 of 899 L/h and a microbiological load of 0.317 spores/ml. The second retentate stream R2 has a second retentate outfeed flow rate from the second filtration stage 102 of 100 L/h and a microbiological load of 99 994 spores/ml. The second filtration stage 102 has a performance of 4.5 log reductions of microbiological load. The second filtration stage 101 has a concentration factor of 10 times. The filtration unit, i.e. the first and second filtration stages 101, 102, has a total performance of 4.5 log reductions of microbiological load. The filtration unit 101, 102 has a total concentration factor of 200 times.

As the first retentate stream R1 contains a high level of spores, the second permeate stream P2 has a higher concentration of spores compared to the first permeate stream P1. Although the quantity of permeate from the second filtration stage 102 is relatively small compared to the total permeate volume, it will reduce total performance of the filtration unit 101, 102. Therefore, the overall performance is optimized when only collecting the first permeate stream P1 as the dairy product.

As further depicted in Fig. 1, the first permeate stream P1, which is collected as the dairy product, is fed to a pasteurizer 104. The pasteurizer 104 is arranged to pasteurize the first permeate stream P1 to form the dairy product. The first permeate stream P1 is pasteurized to kill harmful bacteria and extend shelf life without markedly affecting the physical or chemical properties of the dairy product. There are different types of heat treatment known in the art. By way of example, pasteurization is typically carried out at temperatures between 63°C and 72°C for 15 to 30 seconds for low-temperature processes. Pasteurization may also be carried out at temperatures between 135°C and 140°C for a few seconds for high-temperature processes, this is also known as Ultra High Temperature (UHT) treatment. The UHT treatment may be performed by indirect heating and cooling in heat exchanger or by direct heating by steam injection or infusion of milk into steam and cooling by expansion under vacuum. Parameters that define the pasteurization, such as the specific temperature of the first permeate stream P1 and the duration of which the first permeate stream P1 is subject to the specific temperature, shall meet all legal requirements regarding reduction of undesired microorganisms.

Prior to entering the pasteurizer 104, the dairy product may enter one or more processing units 103, such as a mixing unit and/or a homogenizer. A mixing unit is configured for mixing which is a common operation in food processing and aims to efficiently achieve a smooth, homogenous product with consistent quality. A homogenizer is configured for primarily causes disruption of fat globules into much smaller ones. Consequently, it diminishes creaming and may also dimmish the tendency of globules to clump of coalesce. Essentially, all homogenized dairy product is produced by mechanical means. The dairy product is forced through a small passage at high velocity. The disintegration of the original fat globules is achieved by a combination of contributing factors such as turbulence and cavitation. Homogenization ensures a uniform consistency and prevents separation by breaking down fat molecules. As indicated by the dotted line, including the one or more processing units 103 in the system 100 is optional.

After the pasteurizer 104, the dairy product may be fed to one or more further processing units, such as for example one or more cooling means 105. Cooling means 105 are configured for actively decreasing the temperature of pasteurized dairy product to inhibit the growth of microorganism. As indicated by the dotted line, including the one or more cooling means 105 in the system 100 is optional.

Finally, the dairy product is fed to a filling machine 106 arranged to fill packages 107 with the pasteurized dairy product. Preferably, the dairy product is packed in sterile packages 107 to maintain freshness and prevent contamination.

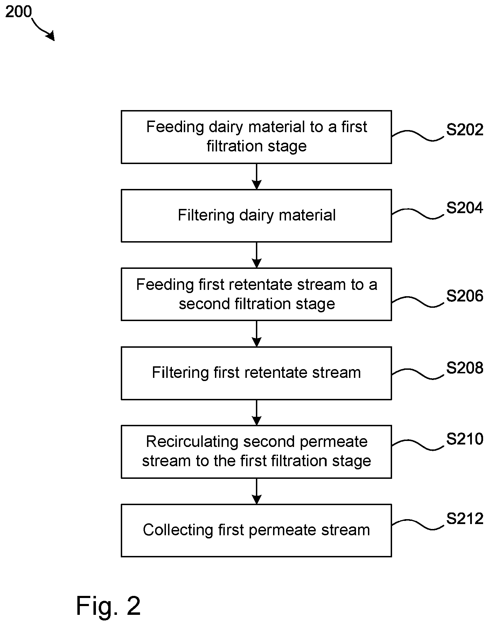

It is to be noted that in a preferred embodiment, and as depicted in Fig. 1, the first and second filtration stages 101, 102 are the only filtration stages that takes place in the system 100 for producing the dairy product. Thus, in a preferred embodiment, the first and second filtration stages 101, 102 are the only filtration stages that are used by the disclosed method 200 which is further discussed and illustrated in connection with Fig. 2. In addition, no other processing such as modification, heat treatment, separation, blending, homogenization or enzymatic treatment is performed on the first retentate stream R1 before it enters the second filtration stage 102. Thus, the first retentate stream R1 is fed directly from the first filtration stage 101 to the second filtration stage 102. Similar, no processing or modification of any kind is performed on the second permeate stream P2 before it enters the first filtration stage 101. Thus, the second permeate stream P2 is fed directly from the second filtration stage 102 to the first filtration stage 101. As used herein, directly indicates that no other processing is present between the first and second filtration stages 101, 102. However, pumps, valves or the like may be present to being able to control the flow in an efficient way.

Fig. 2 is a flowchart illustrating a method 200 for producing a dairy product. The method 200 comprising a first step S202 in which a dairy material DM is fed to a first filtration stage 101 as discussed in connection with Fig. 1. Thereafter, in a second step S204, the dairy material DM is filtered, in the first filtration stage 101, into a first permeate stream P1 and a first retentate stream R1 as discussed in connection with Fig. 1. In a third step S206, the first retentate stream R1 is fed to a second filtration stage 102 as discussed in connection with Fig. 2. Thereafter, in a fourth step S208, the first retentate stream R1 is filtered, in the second filtration stage 102, into a second permeate stream P2 and a second retentate stream R2 as discussed in connection with Fig. 1. In a fifth step S210, the second permeate stream P2 is recirculated by feeding it to the first filtration stage 101. In a sixth step S212, the first permeate stream P1 is collected as a dairy product.

It should be noted that in a preferred embodiment, the method 200 only uses the first filtration stage 101 and the second filtration stage 102, without involving any further filtration stages. It should be further noted that in a preferred embodiment, the method 200 does not comprises performing any processing or modification of any kind on the first retentate stream R1 before it enters the second filtration stage 102. Thus, the first retentate stream R1 is fed directly from the first filtration stage 101 to the second filtration stage 102. Similar, the method 200 does not comprises performing any processing or modification of any kind on the second permeate stream P2 before it enters the first filtration stage 101. Thus, the second permeate stream P2 is fed directly from the second filtration stage 102 to the first filtration stage 101.

Even though illustrated and described in a certain order, other orders may also be used.

From the description above follows that, although various embodiments of the invention have been described and shown, the invention is not restricted thereto, but may also be embodied in other ways within the scope of the subject-matter defined in the following claims.

## Claims

1. A method (200) for producing a diary product, the method (200) comprising:
feeding (S202) a dairy material (DM) to a first filtration stage (101);
filtering (S204) the dairy material (DM), in the first filtration stage (101), into a first permeate stream (P1) and a first retentate stream (R1);
feeding (S206) the first retentate stream (R1) to a second filtration stage (102);
filtering (S208) the first retentate stream (R1) into a second permeate stream (P2) and a second retentate stream (R2);
recirculating (S210) the second permeate stream (P2) by feeding it to the first filtration stage (101); and
collecting (S212) the first permeate stream (P1) as the dairy product.

2. The method (200) according to claim 1, wherein the dairy material (DM) is filtered in the first filtration stage (101) at a concentration factor of 15-25 times.

3. The method (200) according to claim 1 or 2, wherein the first retentate stream (R1) is filtered in the second filtration stage (102) at a concentration factor of 5-15 times.

4. The method (200) according to any one of the preceding claims, wherein the second permeate stream (P2) is recirculated to the first filtration stage (101) with an infeed flow rate which is 5-15 times higher than an outfeed flow rate of the second retentate stream (R2).

5. The method (200) according to any one of the preceding claims, wherein the first retentate stream (R1) has 15-25 times higher microbiological load per liter than the dairy material (DM).

6. The method (200) according to any one of the preceding claims, wherein the second permeate stream (P2) has 10-20 times higher microbiological load per liter than the first permeate stream (P1).

7. The method (200) according to any one of the preceding claims, wherein the first filtration stage (101) has a performance of 3.5-5.5 log reductions of microbiological load.

8. The method (200) according to any one of the preceding claims, wherein the second filtration stage (102) has a performance of 3.5-5.5 log reductions of microbiological load.

9. The method (200) according to any one of the preceding claims, wherein the first filtration stage (101) comprises one or more ceramic membranes.

10. The method (200) according to any one of the preceding claims, wherein the second filtration stage (100) comprises one or more ceramic membranes.

11. The method (200) according to any one of the preceding claims, wherein the first filtration stage (101) comprises a microfilter having a pore size ranging from 0.1 to 10 micrometers.

12. The method (200) according to any one of the preceding claims, wherein the second filtration stage (102) comprises a microfilter having a pore size ranging from 0.1 to 10 micrometers.

13. The method (200) according to any one of the preceding claims, wherein the first and second filtration stages (101, 102) are the only filtration stages that are used by the method.

14. The method (200) according to any one of the preceding claims, wherein the dairy material (DM) is skim milk, sweet whey or acid whey.

15. A system (100) configured to produce a diary product, the system (100) comprising:
a first filtration stage (101) arranged to filter the dairy material (DM) into a first permeate stream (P1) and a first retentate stream (R1);
a second filtration stage (102) arranged to filter the first retentate stream (R1) into a second permeate stream (P2) and a second retentate stream (R2);
a pasteurizer (104) arranged to pasteurize the first permeate stream (P1) to form the dairy product; and
a filling machine (106) arranged to fill packages (107) with the pasteurized dairy product.
